# EUROPÄISCHE PATENTSCHRIFT

(11) **EP 3 233 746 B1**
(45) Veröffentlichungstag und Bekanntmachung des Hinweises auf die Patenterteilung: **05.06.2019**
(21) Anmeldenummer: 15805436.1
(22) Anmeldetag: 02.12.2015
(51) Int. Cl.: C03C 17/36, B32B 17/10, C03B 33/07, C03C 23/00, H05B 3/84, C03B 33/10

(54) **VERFAHREN ZUR HERSTELLUNG EINER VERBUNDSCHEIBE MIT KORROSIONSGESCHÜTZTER FUNKTIONELLER BESCHICHTUNG**
METHOD FOR PRODUCING A COMPOSITE GLASS WITH CORROSION-RESISTANT FUNCTIONAL COATING
PROCÉDÉ DE FABRICATION D'UNE VITRE COMPOSITE DOTÉE DE REVÊTEMENT FONCTIONNEL PROTÉGÉ CONTRE LA CORROSION

(30) Priorität: 18.12.2014 EP 14198940
(43) Veröffentlichungstag der Anmeldung: 25.10.2017
(73) Patentinhaber: Saint-Gobain Glass France, 92400 Courbevoie (FR)
(72) Erfinder: SCHULZ, Valentin, 52382 Niederzier (DE); CUCCHI, Irène, 59000 Lille (FR)
(74) Vertreter: Gebauer, Dieter Edmund
(86) Internationale Anmeldenummer: PCT/EP2015/078354
(87) Internationale Veröffentlichungsnummer: WO 2016/096435

(56) Entgegenhaltungen:
- WO-A1-2014/060203
- DE-A1-102011 075 328
- DE-B3-102008 058 310
- DE-C1- 3 403 682
- DE-C1- 4 404 159
- DE-U1-202011 110 333
- JP-A- 2002 182 185
- US-A1- 2004 146 645
- US-A1- 2005 238 861

## Beschreibung

Die Erfindung betrifft ein Verfahren zur Herstellung einer Verbundscheibe mit korrosionsgeschützter funktioneller Beschichtung sowie eine Vorrichtung zur Durchführung des erfindungsgemäßen Verfahrens.

Verbundscheiben aus zwei oder mehr gläsernen oder polymeren Scheiben werden in vielfältiger Weise in Gebäuden, Möbeln oder in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheibe und/oder Dachscheibe eingesetzt.

Oftmals sind auf einzelnen Seiten der Scheiben eine oder mehrere funktionelle Beschichtungen angeordnet, die beispielsweise infrarotreflektierende Eigenschaften, Antireflex-Eigenschaften oder Low-E-Eigenschaften aufweisen oder durch Anlegen einer Spannung elektrisch beheizbar sind. Derartige Verbundscheiben sind beispielsweise aus der US 2004/0146645 A1, der US 2005/0238861 A1 oder der WO 20141060203 A1 bekannt. Verfahren zur Bearbeitung und insbesondere zur Entschichtung von Scheiben mit funktionellen Beschichtungen sind beispielsweise aus der DE 34 03 682 C1, der DE 10 2008 058 310 B3, der DE 10 2011 075 328 A1 oder der EP 0 517 176 A1 bekannt. Insbesondere ist in US 2005/0238861 A1 eine Verbundscheibe mit einer funktionellen Beschichtung und einem randentschichteten Bereich gezeigt. Die Randentschichtung kann vor oder nach dem Schneiden der beschichteten Scheibe durchgeführt werden. In DE 102008058310 ist ein Aufbau gezeigt, bei dem eine Scheibe durch einen ersten Laser geschnitten und durch einen zweiten Laser randentschichtet wird. Die beiden Laser sind auf gegenüberliegenden Seiten der Scheibe angeordnet. Die bei der Randentschichtung entstehenden Partikel werden durch einen Absaugtrichter abgesaugt.

Des Weiteren sind Verbundscheiben bekannt, die auf einer innenseitigen Oberfläche einer der Einzelscheiben eine elektrische Heizschicht aus einer transparenten, elektrisch leitfähigen Beschichtung aufweisen. Durch eine externe Spannungsquelle kann ein elektrischer Strom durch die elektrisch leitfähige Beschichtung geleitet werden, der die Beschichtung und damit die Scheibe erwärmt.

WO 2003/024155 A2, US 2007/0082219 A1, US 2007/0020465 A1 und WO2012/052315 A1 offenbaren beispielsweise eine solche beheizbare, elektrisch leitfähige Beschichtung auf Metallbasis und insbesondere auf der Basis eines Schichtaufbaus von einer oder mehreren silberhaltigen Lagen.

Derartige funktionelle Beschichtungen und insbesondere metallbasierte und elektrisch leitfähige Beschichtungen sind sehr korrosionsanfällig und müssen daher hermetisch abgeschlossen und vor Feuchtigkeit geschützt werden. Dazu wird eine innenliegende funktionelle Beschichtung entlang eines umlaufenden rahmenförmigen Bereichs der Verbundscheibe entschichtet. Die Breite des umlaufenden rahmenförmigen Bereichs beträgt üblicherweise von 5 mm bis 20 mm und endet an der Seitenkante der Verbundscheibe. Üblicherweise erfolgt die Entschichtung in einem aufwendigen und lange dauernden Verfahren durch mechanische Abrasion, beispielsweise durch Schleifen mit einer Schleifscheibe. Der beschichtungsfreie Bereich wird im Innern der Verbundscheibe durch die thermoplastische Zwischenschicht und/oder einen Acrylatkleber als Dampfdiffusionssperre hermetisch versiegelt. Durch die Dampfdiffusionssperre wird die korrosionsempfindliche funktionelle Beschichtung vor Feuchtigkeit und Luftsauerstoff geschützt. Ist die Verbundscheibe als Fahrzeugscheibe, beispielsweise als elektrisch beheizbare Windschutzscheibe vorgesehen, so bewirkt der umlaufende beschichtungsfreie Bereich zudem eine elektrische Isolierung zwischen der spannungsführenden Beschichtung und der Fahrzeugkarosserie.

Die Aufgabe der vorliegenden Erfindung besteht darin, ein verbessertes Verfahren zur Herstellung einer Verbundscheibe mit korrosionsgeschützter funktioneller Beschichtung bereitzustellen, das einfach und schnell und dadurch kostengünstig durchzuführen ist.

Die Aufgabe der vorliegenden Erfindung wird erfindungsgemäß durch ein Verfahren gemäß Anspruch 1 gelöst. Bevorzugte Ausführungsformen gehen aus den Unteransprüchen hervor.

Das erfindungsgemäße Verfahren zur Herstellung einer Verbundscheibe mit funktioneller Beschichtung umfasst mindestens die folgenden Schritte:
(a) Aufbringen einer funktionellen Beschichtung auf mindestens einen Teil einer Oberfläche (III) einer Basisscheibe,
(b) Herausschneiden einer ersten Scheibe aus der Basisscheibe durch ein Schneidewerkzeug und Einbringen mindestens eines beschichtungsfreien Bereichs in die funktionelle Beschichtung durch ein Entschichtungswerkzeug, wobei der beschichtungsfreie Bereich einen inneren Bereich der funktionellen Beschichtung vollständig umgibt,
(c) Verbinden der Oberfläche (III) der ersten Scheibe mit der funktionellen Beschichtung über eine thermoplastische Zwischenschicht mit einer Oberfläche (II) einer zweiten Scheibe.

Das heißt der beschichtungsfreie Bereich ist rahmenförmig umlaufend um den inneren Bereich angeordnet und der innere Bereich grenzt nicht an eine Seitenkante der ersten Scheibe.

Für das erfindungsgemäße Verfahren ist es besonders wichtig, dass das Herausschneiden der ersten Scheibe und das Entschichten des beschichtungsfreien Bereichs in einem Verfahrensschritt und damit gleichzeitig erfolgen.

Bei Verfahren nach dem Stand der Technik wird zunächst die erste Scheibe aus der Basisscheibe herausgeschnitten und in einem zweiten Verfahrensschritt durch mechanische Abrasion ein breiter Bereich randentschichtet. Dieser zweite Verfahrensschritt ist sehr zeitaufwendig und benötigt eine eigene Prozessstation und ist somit sehr teuer.

Beim erfindungsgemäßen Verfahren wird durch das Herausschneiden und zeitgleiche Entschichten eine Prozessstation eingespart und das Verfahren dadurch beschleunigt. Dabei ist es besonders vorteilhaft, wenn das Entschichtungswerkzeug und das Schneidewerkzeug aufeinander abgestimmt sind: So muss der Entschichtungsprozess in seiner Geschwindigkeit an die Verfahrgeschwindigkeit des Schneidewerkzeugs angepasst werden. Besonders gute Ergebnisse wurden für ein Schneidrad, bevorzugt aus Hartmetall, als Schneidewerkzeug und einem Laserstrahl als Entschichtungswerkzeug erzielt. Insbesondere durch die geeignete Wahl der Laserleistung und der Breite des entschichteten Bereichs lässt sich eine gewünschte Geschwindigkeitsanpassung einfach erzielen.

Die Schneidewerkzeuge und bevorzugt das Schneidrad oder die Diamantspitze werden mit einem Kühlfluid gekühlt. Das Kühlfluid ist bevorzugt ein handelsüblich bekanntes Schneidöl. Das Kühlfluid wird typischerweise zwischen der Schneide oder Spitze des Schneidewerkzeugs und der Oberfläche der Basisscheibe eingebracht, eingespritzt oder aufgesprüht und benetzt dabei einen Bereich der Oberfläche der Basisscheibe.

In dem erfindungsgemäßen Verfahren wird in Schritt (b) der beschichtungsfreie Bereich derart gestaltet, dass der innere Bereich teilweise oder vollständig von mindestens einem äußeren Bereich der funktionellen

Beschichtung umgeben und durch den beschichtungsfreien Bereich von diesem abgetrennt wird.

Als Basisscheibe wird im Folgenden eine Scheibe bezeichnet, die in ihren Abmessungen größer ist als die erste Scheibe und aus der die erste Scheibe nach dem Herausschneiden gebildet wird.

Das Herausschneiden der ersten Scheibe aus der Basisscheibe in Schritt (b) kann auch in einem Anschneiden oder Anritzen einer Oberfläche der Basisscheibe bestehen, wobei die erste Scheibe im Anschluss daran, beispielsweise durch eine geringe mechanische Belastung, aus der Basisscheibe herausbricht. Dies ist bei spröden Werkstoffen wie Glas besonders präzise und schnell durchführbar.

Das Aufbringen der funktionellen Beschichtung in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der Basisscheibe. Die funktionelle Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach dem Verfahrensschritt (a) und/oder dem Verfahrensschritt (b) einer Temperaturbehandlung unterzogen werden. Dabei wird die erste Scheibe mit der funktionellen Beschichtung auf eine Temperatur von mindestens 200°C, bevorzugt mindestens 300°C erwärmt. Die Temperaturbehandlung kann der Erhöhung der Transmission und/oder der Verringerung des Flächenwiderstands der funktionellen Beschichtung dienen.

Die erste Scheibe kann nach dem Verfahrensschritt (a) oder nach dem Verfahrensschritt (b) gebogen werden, typischerweise bei einer Temperatur von 500°C bis 700°C. Da es technisch einfacher ist, eine plane Scheibe zu beschichten, ist dieses Vorgehen vorteilhaft, wenn die erste Scheibe gebogen werden soll. Alternativ kann die Basisscheibe aber auch vor Verfahrensschritt (a) gebogen werden, beispielsweise wenn die funktionelle Beschichtung nicht dazu geeignet ist, einen Biegeprozess ohne Beschädigungen zu überstehen.

Die Entschichtung einzelner beschichtungsfreier Bereiche in der funktionellen Beschichtung in Verfahrensschritt (b) erfolgt vorzugsweise durch einen Laserstrahl. Verfahren zum Strukturieren dünner Metallfilme sind beispielsweise aus EP 2 200 097 A1 oder EP 2 139 049 A1 bekannt.

Das Einbringen von Energie zum Entschichten des beschichtungsfreien Bereichs kann erfindungsgemäß mit jedem geeigneten Laser erfolgen. Besonders bevorzugt werden YAG-Laser verwendet, insbesondere Nd:YAG-Laser (Neodym-dotierter Yttrium-Aluminium-Granat-Festkörperlaser) mit einer Wellenlänge im Bereich von 1047 bis 1079 nm (Nanometer), bevorzugt von 1064 nm. Weiterhin wird ein Yb:YAG-Laser (Ytterbium-dotierter Yttrium-Aluminium-Granat-Festkörperlaser) mit einer Wellenlänge im Bereich von 1030 nm bevorzugt. In vorteilhaften Weiterbildungen können beide Lasertypen mit einer Frequenzverdopplung (gedoppelt) oder einer Frequenzverdreifachung (getrippelt) verwendet werden.

In einer alternativen erfindungsgemäßen Ausführungsform werden YAG-Laser zum Entschichten der funktionellen Beschichtung verwendet, insbesondere mit einer hohen Pulsfrequenz im Pico- und Nanosekundenbereich. Die Entschichtungsqualität ist sehr gut und die funktionelle Beschichtung ist im Wesentlichen vollständig entfernt. Insbesondere bei Verwendung eines Glassubstrats als erste Scheibe ist die Oberfläche frei von Mikrorissen und zeigt eine niedrige optische Streuung sowie hohe Festigkeitswerten im 2-Punkt-Biegeversuch.

Alternative sind für die Entschichtung der funktionellen Beschichtung CO₂-Laser besonders geeignet, insbesondere CO₂-Laser mit einer Wellenlänge im Bereich von 9,2 µm bis 11,4 µm, bevorzugt von 10,6 µm oder einem frequenzgedoppelten CO₂-Laser. Dies kann ein gepulster CO₂-Laser oder ein Dauerstrich-CO₂-Laser (cw-Laser, continuous-wave laser) sein.

Für die Durchführung des erfindungsgemäßen Verfahrens ist bei Verwendung eines CO₂-Lasers insbesondere im Hinblick auf die Entschichtungsgeschwindigkeit eine mittlere Laserleistung PAV von kleiner 500 W, bevorzugt von kleiner 300 W, besonders bevorzugt von kleiner 200 W geeignet. In Bezug auf die Entschichtungsqualität ist eine mittlere Laserleistung von kleiner 100 W bevorzugt, welche für die Ausbildung einer guten Entschichtungsqualität förderlich ist, aber die Entschichtungsgeschwindigkeit ist dabei gering.

Für die Durchführung des erfindungsgemäßen Verfahrens wird bei Verwendung eines gepulsten CO₂-Lasers eine mittlere Laserpulsfrequenz fᵣₑₚ von 5 bis 12 kHz (Kilohertz) bevorzugt, insbesondere eine mittlere Laserpulsfrequenz fᵣₑₚ von 8 bis 10 kHz. Weiterhin wird bei Verwendung eines gepulsten CO₂-Lasers eine Laserpulsdauer tₚ von 0,1 bis 500 µs (Mikrosekunden) bevorzugt, insbesondere eine Laserpulsdauer tₚ von 1 bis 100 µs.

Weiterhin wird ein Excimer-Laser, insbesondere ein F₂-Laser (157 nm), ArF-Laser (193 nm), KrF-Laser (248 nm) oder ein Ar-Laser (351 nm) bevorzugt. Solche Lasertypen können je nach Ausführungsform der Erfindung als gepulst oder kontinuierlich (continuous wave) arbeitende Laser eingesetzt werden.

In einer Ausführungsform, welche nicht Teil des erfindungsgemäßen Verfahrens ist, wird in Schritt (b) zur Laserabtragung ein Laserstrahl unmittelbar auf die beschichtete Oberfläche III der ersten Scheibe gelenkt. Dies hat den Vorteil, dass ein Schneidewerkzeug zum Schneiden der ersten Scheibe aus einer größeren Basisscheibe neben dem Laser angeordnet sein kann und simultan mit diesem Verfahren werden kann. Dies vereinfacht die Vorrichtung zur Herstellung der erfindungsgemäßen Verbundscheibe deutlich.

In dem erfindungsgemäßen Verfahren wird in Schritt (b) zur Laserabtragung ein Laserstrahl durch die der beschichteten Oberfläche III der erste Scheibe abgewandte Oberfläche in die erste Scheibe eingekoppelt und somit durch die erste Scheibe hindurch auf die funktionelle Beschichtung geführt. Dies hat den besonderen Vorteil, dass abgetragenes oder verdampftes Material nicht in den Weg des Laserstrahls gelangen kann und diesen somit nicht ablenken, streuen oder dämpfen kann. Daraus resultiert eine höhere Genauigkeit im Abtragungsprozess.

In dem erfindungsgemäßen Verfahren wird das Schneidewerkzeug und der Laserstrahl simultan verfahren. Dabei wird das Schneidewerkzeug über die Oberfläche der Basisscheibe geführt, auf der die funktionelle Beschichtung angeordnet ist. Der Laserstrahl wird dabei durch die der beschichteten Oberfläche der Basisscheibe abgewandte Oberfläche in die Basisscheibe eingekoppelt und durch die Basisscheibe auf die funktionelle Beschichtung geführt. Hierbei wird der Laserstrahl in einem vom dem Kühlfluid bedeckten Bereich der funktionellen Beschichtung geführt. Dies hat den besonderen Vorteil, dass abgedampftes Material der funktionellen Beschichtung sich nicht frei durch die Vorrichtung bewegen kann und somit auch nicht auf benachbarten Bereichen der Basisscheibe niederschlagen kann. Das von der Oberfläche entfernte Material wird im Kühlfluid gebunden und kann mit dem Kühlfluid, beispielsweise in einem typischerweise folgenden Waschschritt, von der beschichteten Oberfläche der ersten Scheibe entfernt werden. Mit einem derartigen Verfahren, lassen sich besonders hochqualitative Scheiben herstellen.

In Verfahrensschritt (c) wird die erste Scheibe so angeordnet, dass diejenige ihrer Oberflächen, welche mit der funktionellen Beschichtung versehen ist, der thermoplastischen Zwischenschicht zugewandt ist. Die Oberfläche wird dadurch zur innenseitigen Oberfläche der ersten Scheibe.

Die thermoplastische Zwischenschicht kann durch eine einzelne oder auch durch zwei oder mehrere Zwischenschichten, die flächenmäßig übereinander angeordnet werden, ausgebildet werden.

Das Verbinden von erster und zweiter Scheibe in Verfahrensschritt (c) erfolgt bevorzugt unter Einwirkung von Hitze, Vakuum und/oder Druck. Es können an sich bekannte Verfahren zur Herstellung einer Verbundscheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80°C bis 110°C. Die erste Scheibe, die thermoplastische Zwischenschicht und die zweite Scheibe können auch in einem Kalander zwischen mindestens einem Walzenpaar zu einer Verbundscheibe verpresst werden. Anlagen dieser Art sind zur Herstellung von Verbundscheiben bekannt und verfügen normalerweise über mindestens einen Heiztunnel vor einem Presswerk. Die Temperatur während des Pressvorgangs beträgt beispielsweise von 40°C bis 150°C. Kombinationen von Kalander- und Autoklawerfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die Erfindung umfasst des Weiteren eine Vorrichtung zur Durchführung des erfindungsgemäßen Verfahrens. Die erfindungsgemäße Vorrichtung umfasst mindestens:
- ein Schneidewerkzeug zum Herausschneiden oder Anritzen einer ersten Scheibe aus einer Basisscheibe ,
- ein Entschichtungswerkzeug zum Einbringen eines beschichtungsfreien Bereichs in eine funktionelle Beschichtung auf der Basisscheibe und
- eine Verfahreinrichtung zum Verfahren des Schneidewerkzeugs und des Entschichtungswerkzeugs.

Erfindungsgemäß umfasst das Schneidewerkzeug ein Schneidrad, bevorzugt aus einem Hartmetall, eine Diamantspitze oder eine Hartmetallspitze. Hierbei wird das Schneidewerkzeug, insbesondere im Bereich des Kontakts mit der Basisscheibe, mit einem Kühlfluid gekühlt. In einer alternativen vorteilhaften Ausgestaltung umfasst das Schneidewerkzeug einen Laserstrahl.

Ebenso versteht es sich, dass das Schneidewerkzeug bei einer Basisscheibe aus einem spröden Werkstoff wie Glas, diese nur anschneidet oder anritzt und die erste Scheibe im Anschluss, beispielsweise durch eine geringe mechanische Belastung, aus der Basisscheibe herausbricht.

Erfindungsgemäß umfasst das Entschichtungswerkzeug einen Laserstrahl. Ein Laserstrahl ist besonders vorteilhaft um eine vollständige, schnelle und damit kostengünstige Entschichtung zu bewirken.

In einer vorteilhaften Ausgestaltung umfasst die Verfahreinrichtung einen Roboter oder ein Mehr-Achsen-Handhabungsgerät und bevorzugt einen X-Y-Verfahr-tisch. In einer vorteilhaften Ausgestaltung sind das Entschichtungswerkzeug und das Schneidewerkzeug miteinander verbunden oder werden simultan miteinander durch dieselbe Verfahreinrichtung verfahren. Dies macht die erfindungsgemäße Vorrichtung besonders einfach und kostengünstig-

In der erfindungsgemäßen Vorrichtung umfasst das Entschichtungswerkzeug einen Laserstrahl. Das Entschichtungswerkzeug und das Schneidewerkzeug sind auf gegenüberliegenden Seiten einer Ebene angeordnet, in der die Basisscheibe angeordnet ist. Die Vorrichtung ist somit derart eingerichtet, dass das Schneidewerkzeug eine Oberfläche der Basisscheibe bearbeiten kann und der Laserstrahl durch die gegenüberliegende Oberfläche der Basisscheibe in die Basisscheibe eintritt und durch sie hindurch auf die funktionelle Beschichtung trifft. Die Basisscheibe ist dabei mit der Oberfläche, auf der die funktionelle Beschichtung angeordnet ist, dem Schneidewerkzeug zugewandt, so dass der Laserstrahl durch die der beschichteten Oberfläche gegenüberliegenden Oberfläche in die Basisscheibe eindringen kann. Schneidewerkzeug und Laserstrahl sind dabei derart geführt, dass der Laserstrahl nach Passieren der Basisscheibe in einem Bereich der funktionellen Beschichtung auftritt, der von dem Kühlfluid bedeckt ist. Dabei trifft der Laserstrahl auf die Grenzfläche zwischen Basisscheibe und funktioneller Beschichtung auf, während die der Grenzfläche abgewandte Seite der funktionellen Beschichtung mit dem Kühlfluid bedeckt ist. Dies hat - wie oben bereits ausgeführt - den besonderen Vorteil, dass entfernte Bestandteile der funktionellen Beschichtung im Kühlfluid gebunden werden und später abgewaschen werden können.

Die Erfindung umfasst des Weiteren eine mit dem erfindungsgemäßen Verfahren hergestellte Verbundscheibe mit funktioneller Beschichtung, wobei diese zumindest die folgenden Merkmale umfasst:
- eine erste Scheibe mit einer Oberfläche III, eine zweite Scheibe mit einer Oberfläche II und eine thermoplastische Zwischenschicht, wobei die Oberfläche III der ersten Scheibe durch die thermoplastische Zwischenschicht mit der Oberfläche II der zweiten Scheibe flächig verbunden ist.
- mindestens eine funktionelle Beschichtung, die zumindest auf einem Teil der innenliegenden Oberfläche III der ersten Scheibe aufgebracht ist,
- mindestens einen beschichtungsfreien Bereich, der einen inneren Bereich der funktionellen Beschichtung vollständig umgibt.

Dies hat zur Folge, dass der innere Bereich nicht an eine Seltenkante der ersten Scheibe grenzt.

In einer vorteilhaften Ausgestaltungsform ist der beschichtungsfreie Bereich zumindest teilweise oder bevorzugt vollständig von einem äußeren Bereich der funktionellen Beschichtung umgeben. Das heißt der innere Bereich und der beschichtungsfreie Bereich sind zumindest teilweise und bevorzugt vollständig innerhalb des äußeren Bereichs der funktionellen Beschichtung angeordnet.

Vollständig umgeben bedeutet hier, dass der beschichtungsfreie Bereich vollständig von einem rahmenförmig umlaufenden äußeren Bereich der funktionellen Beschichtung umgeben ist.

Der äußere Bereich der funktionellen Beschichtung kann wiederum von einem weiteren beschichtungsfreien Bereich und dieser kann wiederum von einem weiteren äußeren Bereich der funktionellen Beschichtung zumindest teilweise und bevorzugt vollständig umgeben sein.

Im Rahmen der Erfindung gibt es keine stoffliche Verbindung des Materials der funktionellen Beschichtung zwischen dem inneren Bereich und der Seitenkante der ersten Scheibe beziehungsweise zwischen dem inneren Bereich und einem äußeren Bereich oder mehreren äußeren Bereichen. Der beschichtungsfreie Bereich und die funktionelle Beschichtung im inneren Bereich werden während des Laminiervorgangs zur Herstellung der Verbundscheibe hermetisch durch die Zwischenschicht versiegelt. So kann Feuchtigkeit aus der Umgebung der Verbundscheibe nicht mehr zum inneren Bereich der funktionellen Beschichtung gelangen und die funktionelle Beschichtung im inneren Bereich wird wirkungsvoll vor Korrosion geschützt.

In einer vorteilhaften Ausgestaltung der erfindungsgemäßen Verbundscheibe ist der beschichtungsfreie Bereich streifenförmig und im Wesentlichen parallel zu den Seitenkanten der ersten Scheibe angeordnet. Dies hat besondere prozesstechnische Vorteile, da das Entschichtungswerkzeug parallel zum Schneidewerkzeug und damit parallel zur Seitenkante und entlang der gesamten ersten Scheibe geführt werden kann. Die sichere stoffliche Trennung des inneren Bereichs von der Umgebung der Verbundscheibe wird durch sich überkreuzenden beschichtungsfreien Bereiche in den Eckbereichen der ersten Scheibe sichergestellt.

Dies bedeutet, dass der beschichtungsfreie Bereich im Wesentlichen vollständig von einem rahmenförmig umlaufenden Bereich der funktionellen Beschichtung des äußeren Bereichs umgeben ist. Hinzu kommen Verlängerungselemente der streifenförmigen beschichtungsfreien Bereich, die den rahmenförmig umlaufenden beschichtungsfreien Bereich innerhalb des äußeren Bereichs mit den Seitenkanten der ersten Scheibe verbinden. Da auch diese Verlängerungselemente in der fertigen Verbundscheibe hermetisch durch die Zwischenschicht versiegelt werden, hat dies keinen Einfluss auf die Korrosionsbeständigkeit der funktionellen Beschichtung.

In einer weiteren vorteilhaften Ausgestaltung der erfindungsgemäßen Verbundscheibe beträgt die Breite b des oder der äußeren Bereiche von 0,5 mm bis 30 mm und bevorzugt von 3 mm bis 11 mm. Die Breite ist hier definiert als die Dimension orthogonal zum Rand des inneren Bereichs. Derartige Breiten b sind besonders vorteilhaften, da sie einerseits einen sicheren Korrosionsschutz ermöglichen und andererseits durch einen Schwarz- oder Dekordruck oder durch die Karosserie verdeckt werden können.

In einer besonders vorteilhaften Ausgestaltung der erfindungsgemäßen Verbundscheibe umgibt der äußere Bereich den inneren Bereich zu mehr als 70% und bevorzugt zu mehr als 90% der Länge des Umfangs des inneren Bereichs. Das heißt der äußere Bereich ist nur in wenigen Zone, wie beschichtungsfreien Kommunikationsfenstern oder im Bereich von Zuleitungen zu den Sammelleitern, ausgenommen.

In einer weiteren vorteilhaften Ausgestaltung der erfindungsgemäßen Verbundscheibe ist ein erster beschichtungsfreier Bereich vollständig von einem zweiten beschichtungsfreien Bereich geben. Der äußere Bereich mit funktioneller Beschichtung ist also zwischen dem ersten und dem zweiten beschichtungsfreien Bereich angeordnet. Besonders bevorzugt ist der zweite beschichtungsfreie Bereich vollständig von einem dritten beschichtungsfreien Bereich umgeben. Das heißt, dass ein weiterer, zweiter äußerer Bereich mit einer funktionellen Beschichtung zwischen dem zweiten und dem dritten beschichtungsfreien Bereich angeordnet. Durch einen derartigen zweiten beziehungsweise dritten beschichtungsfreien Bereich kann ein besonders guter Feuchtigkeitsschutz und damit ein besonders guter Korrosionsschutz erzielt werden.

In einer weiteren vorteilhaften Ausgestaltung der erfindungsgemäßen Verbundscheibe beträgt die Breite d des beschichtungsfreien Bereichs von 30 µm bis 30 mm, bevorzugt von 100 µm bis 2 mm und besonders bevorzugt von 250 µm bis 1,5 mm und insbesondere von 250 µm bis 500 µm. Dies hat den besonderen Vorteil, dass beschichtungsfreie Bereiche mit einer derart geringen Breite sehr schnell und einfach hergestellt werden können.

Die beschichtungsfreien Bereiche können durch jede geeignete technische Methode hergestellt werden. Besonders bevorzugt ist eine Entschichtung durch Laserabtragung. Diese hat den besonderen Vorteil, dass Sie kostengünstig, schnell und präzise durchgeführt werden kann. Die Laserabtragung ist wegen der Präzision auch besonders für schmale Breiten d geeignet.

Als erste und zweite Scheibe sind im Grunde alle elektrisch isolierenden Substrate geeignet, die unter den Bedingungen der Herstellung und der Verwendung der erfindungsgemäßen Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als Windschutzscheide oder Rückscheibe eines Fahrzeugs oder anderen Verwendungen bei denen eine hohe Lichttransmission erwünscht ist. Als transparent im Sinne der Erfindung wird eine Scheibe verstanden, die eine Transmission im sichtbaren Spektralbereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Die Dicke der einzelnen Scheiben kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die erste Scheibe und gegebenenfalls die zweite Scheibe weisen beispielsweise im Fahrzeugbau und Architekturbereich übliche Flächen von 200 cm² bis zu 20 m² auf. Die Verbundscheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Mehrere einzelne Scheiben werden durch mindestens eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und / oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Zwischenschichten mit schlechteren Klebeeigenschaften können auch zwischen Zwischenschichten mit besseren Klebeeigenschaften angeordnet und laminiert sein, beispielsweise PVB/PET/PVB. Die thermoplastische Zwischenschicht kann durch eine oder auch durch mehrere übereinander angeordnete thermoplastische Folien ausgebildet werden, wobei die Dicke ein thermoplastischen Folie bevorzugt von 0,25 mm bis 1 mm beträgt, typischerweise 0,38 mm oder 0,76 mm.

Bei einer erfindungsgemäßen Verbundscheibe aus einer ersten Scheibe, einer thermoplastischen Zwischenschicht und einer zweiten Scheibe ist die funktionelle Beschichtung direkt auf die erste Scheibe aufgebracht. Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die funktionelle Beschichtung ist auf der innenseitigen Oberfläche der ersten Scheibe aufgebracht. Natürlich kann auch auf der innenseitigen Oberfläche der zweiten Scheibe eine weitere funktionelle Beschichtung aufgebracht sein. Auch die außenseitigen Oberflächen der Scheiben können Beschichtungen aufweisen. Die Begriffe "erste Scheibe" und "zweiten Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Scheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Die funktionelle Beschichtung ist bevorzugt transparent. Transparent bedeutet hier durchlässig für elektromagnetische Strahlung, vorzugsweise elektromagnetische Strahlung einer Wellenlänge von 300 nm bis 1.300 nm und insbesondere für sichtbares Licht. Als transparent im Sinne der Erfindung wird somit eine Verbundscheibe mit funktioneller Beschichtung verstanden, die eine Transmission im sichtbaren Spektralbereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Wird die funktionelle Beschichtung zur elektrischen Beheizung der Verbundscheibe verwendet, so ist sie als elektrisch leitfähige funktionelle Beschichtung und bevorzugt als transparente, elektrisch leitfähige funktionelle Beschichtung ausgebildet.

Erfindungsgemäße elektrisch leitfähige funktionelle Beschichtungen sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew.-% des Metalls, insbesondere mindestens 99,9 Gew.-% des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der funktionellen Beschichtung zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schicht können aber auch mehrere Einzelschichten umfassen, beispielsweise Einzelschichten eines einem dielektrischen Material, Glättungsschichten, Anpassungsschichten, Blockerschichten und / oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete funktionelle Beschichtungen enthalten bevorzugt Indium-Zinnoxid (ITO), fluordotiertes Zinnoxid (SnO₂:F) oder aluminiumdotiertes Zinkoxid (ZnO:Al).

Eine als elektrische Heizschicht verwendete funktionelle Beschichtung kann prinzipiell jede Beschichtung sein, die elektrisch kontaktiert werden kann. Soll die erfindungsgemäße Scheibe die Durchsicht ermöglichen, wie es beispielsweise bei Scheiben im Fensterbereich der Fall ist, so ist die funktionelle Beschichtung bevorzugt transparent.

In einer vorteilhaften Ausgestaltung ist die funktionelle Beschichtung eine Schicht oder ein Schichtaufbau mehrere Einzelschichten mit einer Gesamtdicke von kleiner oder gleich 2 µm, besonders bevorzugt kleiner oder gleich 1 µm.

Eine vorteilhafte erfindungsgemäße funktionelle Beschichtung, die als elektrische Heizschicht verwendet wird, weist einen Flächenwiderstand von 0,4 Ohm/Quadrat bis 10 Ohm/Quadrat auf. In einer besonders bevorzugten Ausgestaltung weist die erfindungsgemäße funktionelle Beschichtung einen Flächenwiderstand von 0,5 Ohm/Quadrat bis 1 Ohm/Quadrat auf. Beschichtungen mit derartigen Flächenwiderständen eignen sich besonders zur Beheizung von Fahrzeugscheiben bei typischen Bordspannungen von 12 V bis 48 Volt oder bei Elektrofahrzeugen mit typischen Bordspannungen von bis zu 500 V.

In einer vorteilhaften Ausgestaltung weist die erfindungsgemäße Verbundscheibe mindestens zwei zum Anschluss an eine Spannungsquelle vorgesehene Sammelleiter auf, die mit einer elektrisch leitfähigen funktionellen Beschichtung und bevorzugt mit einer transparenten, elektrisch leitfähigen funktionellen Beschichtung so verbunden sind, dass zwischen den Sammelleitern ein Strompfad für einen Heizstrom geformt ist.

Die Sammelleiter sind bevorzugt entlang der oberen und unteren Seitenkante des inneren Bereichs der elektrisch leitfähigen funktionellen Beschichtung angeordnet. Die Länge des Sammelleiters ist typischerweise im Wesentlichen gleich der Länge des inneren Bereichs, kann aber auch kleiner sein. Es können auch mehr als zwei Sammelleiter auf der elektrisch leitfähigen funktionellen Beschichtung angeordnet sein, bevorzugt im Randbereich entlang zweier gegenüberliegenden Seitenkanten des inneren Bereichs. Es können auch mehr als zwei Sammelleiter auf der funktionelle Beschichtung angeordnet sein, beispielsweise um zwei oder mehrere unabhängige Heizfelder in einer funktionellen Beschichtung auszubilden oder wenn der Sammelleiter durch eine oder mehrere unbeschichtete Zonen unterbrochen oder versetzt ist.

In einer vorteilhaften Ausgestaltung ist der erfindungsgemäße Sammelleiter als aufgedruckte und eingebrannte leitfähige Struktur ausgebildet. Der aufgedruckte Sammelleiter enthält bevorzugt zumindest ein Metall, eine Metalllegierung, eine Metallverbindung und/oder Kohlenstoff, besonders bevorzugt ein Edelmetall und insbesondere Silber. Die Druckpaste enthält bevorzugt metallische Partikel Metallpartikel und/oder Kohlenstoff und insbesondere Edelmetallpartikel wie Silberpartikel. Die elektrische Leitfähigkeit wird bevorzugt durch die elektrisch leitenden Partikel erzielt. Die Partikel können sich in einer organischen und / oder anorganischen Matrix wie Pasten oder Tinten befinden, bevorzugt als Druckpaste mit Glasfritten.

Die Breite des ersten und zweiten Sammelleiters beträgt bevorzugt von 2 mm bis 30 mm, besonders bevorzugt von 4 mm bis 20 mm und insbesondere von 10 mm bis 20 mm. Dünnere Sammelleiter führen zu einen zu hohen elektrischen Widerstand und damit zu einer zu hohen Erwärmung des Sammelleiters im Betrieb. Des Weiteren sind dünnere Sammelleiter nur schwer durch Drucktechniken wie Siebdruck herzustellen. Dickere Sammelleiter erfordern einen unerwünscht hohen Materialeinsatz. Des Weiteren führen sie zu einer zu großen und unästhetischen Einschränkung des Durchsichtbereichs der Scheibe. Die Länge des Sammelleiters richtet sich nach der Ausdehnung der elektrischen Heizschicht. Bei einem Sammelleiter, der typischerweise in Form eines Streifens ausgebildet ist, wird die längere seiner Dimensionen als Länge und die weniger lange seiner Dimensionen als Breite bezeichnet. Die dritten oder zusätzlichen Sammelleiter können auch dünner ausgestaltet sein, bevorzugt von 0,6 mm bis 5 mm.

Die Schichtdicke des aufgedruckten Sammelleiters beträgt bevorzugt von 5 µm bis 40 µm, besonders bevorzugt von 8 µm bis 20 µm und ganz besonders bevorzugt von 8 µm bis 12 µm. Aufgedruckte Sammelleiter mit diesen Dicken sind technisch einfach zu realisieren und weisen eine vorteilhafte Stromtragfähigkeit auf.

Der spezifische Widerstand ρₐ der Sammelleiter beträgt bevorzugt von 0.8 µOhm•cm bis 7.0 µOhm•cm und besonders bevorzugt von 1.0 µOhm•cm bis 2.5 µOhm•cm. Sammelleiter mit spezifischen Widerständen in diesem Bereich sind technisch einfach zu realisieren und weisen eine vorteilhafte Stromtragfähigkeit auf.

Alternativ kann der Sammelleiter als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

Die funktionelle Beschichtung kann sich über die gesamte Oberfläche der ersten Scheibe erstrecken. Die funktionelle Beschichtung kann sich alternativ aber auch nur über einen Teil der Oberfläche der ersten Scheibe erstrecken. Die funktionelle Beschichtung erstreckt sich bevorzugt über mindestens 50%, besonders bevorzugt über mindestens 70% und ganz besonders bevorzugt über mindestens 90% der innenseitigen Oberfläche der ersten Scheibe. Die funktionelle Beschichtung kann im inneren Bereich und/oder im äußeren Bereich eine oder mehrere unbeschichtete Zonen aufweisen. Diese Zonen können für elektromagnetische Strahlung durchlässig sein und sind beispielsweise als Datenübertragungsfenster oder Kommunikationsfenster bekannt.

Die elektrische Zuleitung ist bevorzugt als flexibler Folienleiter (Flachleiter, Flachbandleiter) ausgebildet. Darunter wird ein elektrischer Leiter verstanden, dessen Breite deutlich größer ist als seine Dicke. Ein solcher Folienleiter ist beispielsweise ein Streifen oder Band enthaltend oder bestehend aus Kupfer, verzinntem Kupfer, Aluminium, Silber, Gold oder Legierungen davon. Der Folienleiter weist beispielsweise eine Breite von 2 mm bis 16 mm und eine Dicke von 0,03 mm bis 0,1 mm auf. Der Folienleiter kann eine isolierende, bevorzugt polymere Ummantelung, beispielsweise auf Polyimid-Basis aufweisen. Folienleiter, die sich zur Kontaktierung von elektrisch leitfähigen Beschichtungen in Scheiben eignen, weisen lediglich eine Gesamtdicke von beispielsweise 0,3 mm auf. Derart dünne Folienleiter können ohne Schwierigkeiten zwischen den einzelnen Scheiben in der thermoplastischen Zwischenschicht eingebettet werden. In einem Folienleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

Die Erfindung umfasst weiter die Verwendung der nach dem erfindungsgemäßen Verfahren hergestellten Verbundscheibe mit funktioneller Beschichtung in Gebäuden, insbesondere im Zugangsbereich, Fensterbereich, Dachbereich oder Fassadenbereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1A: eine perspektivische Ansicht einer schematischen Darstellung einer Vorrichtung, welche nicht Teil der Erfindung ist;
- Figur 1B: eine Querschnittsdarstellung entlang der Schnittlinie E-E' einer Basisscheibe 1' aus Figur 1A;
- Figur 1C: eine Querschnittsdarstellung einer erfindungsgemäßen Vorrichtung zu Durchführung des erfindungsgemäßen Verfahrens entlang der Schnittlinie E-E' einer Basisscheibe 1' in Anlehnung an Figur 1A;
- Figur 2: ein detailliertes Flussdiagramm einer Ausführungsform des erfindungsgemäßen Verfahrens;
- Figur 3A: eine Querschnittsdarstellung entlang der Schnittlinie F-F' einer ersten Scheibe 1 aus Figur 1A nach Schritt (b) des erfindungsgemäßen Verfahrens;
- Figur 3B: eine Querschnittsdarstellung entlang der Schnittlinie F-F' einer ersten Scheibe 1 aus Figur 1A nach Schritt (c) des erfindungsgemäßen Verfahrens;
- Figur 4A: eine Draufsicht auf eine Ausgestaltung einer erfindungsgemäßen Verbundscheibe mit funktioneller Beschichtung,
- Figur 4B: eine Querschnittsdarstellung entlang der Schnittlinie B-B' der erfindungsgemäßen Verbundscheibe aus Figur 4A,
- Figur 5A: eine Draufsicht auf eine alternative Ausgestaltung einer erfindungsgemäßen Verbundscheibe mit funktioneller Beschichtung,
- Figur 5B: eine Querschnittsdarstellung entlang der Schnittlinie A-A' der Verbundscheibe aus Figur 5A,
- Figur 6A: eine Draufsicht auf eine weitere Ausgestaltung der erfindungsgemäßen Verbundscheibe mit funktioneller Beschichtung.
- Figur 6B: eine Querschnittsdarstellung entlang der Schnittlinie B-B' der erfindungsgemäßen Verbundscheibe aus Figur 6A,
- Figur 7A: eine Draufsicht auf eine weitere Ausgestaltung der erfindungsgemäßen Verbundscheibe mit funktioneller Beschichtung,
- Figur 7B: eine Querschnittsdarstellung entlang der Schnittlinie C-C' der erfindungsgemäßen Verbundscheibe aus Figur 7A,
- Figur 8A: eine Draufsicht auf eine weitere Ausgestaltung der erfindungsgemäßen Verbundscheibe mit funktioneller Beschichtung,
- Figur 8B: eine Querschnittsdarstellung entlang der Schnittlinie D-D' der erfindungsgemäßen Verbundscheibe aus Figur 8A,

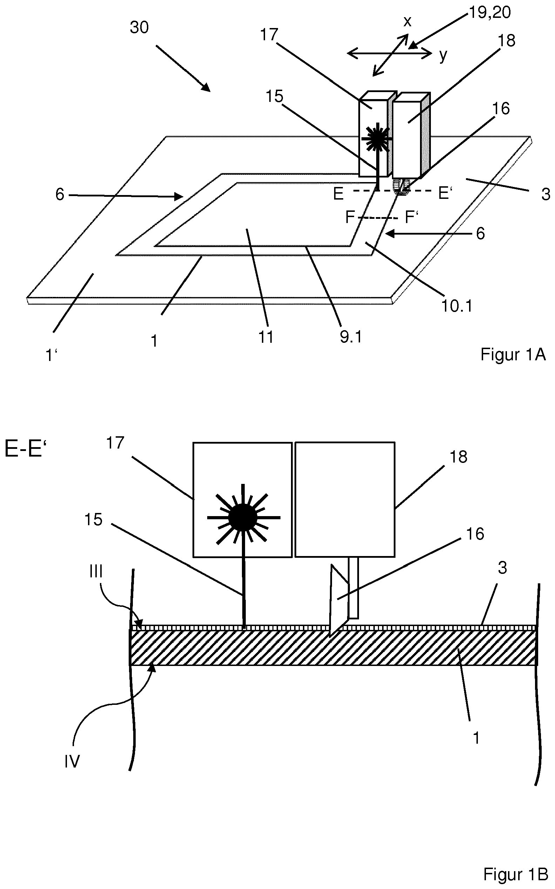

Figur 1A zeigt eine perspektivische Ansicht einer schematischen Darstellung einer Vorrichtung 30, welche nicht Teil der Erfindung ist, zur Durchführung eines

Verfahrens, welches nicht Teil der Erfindung ist. Die Vorrichtung 30 umfasst ein Schneidewerkzeug 18 zum Heraus-schneiden einer ersten Scheibe 1 aus einer größeren Scheibe, die im folgenden Basis-scheibe 1' genannt wird. Auf der Basisscheibe 1' ist eine funktionelle Beschichtung 3 angeordnet.

Figur 1B zeigt eine Querschnittsdarstellung der Vorrichtung 30 aus Figur 1A entlang einer Schnittebene, die parallel zur Schnittlinie E-E' und orthogonal zur Basisscheibe 1' verläuft.

Das Schneidewerkzeug 18 ist in diesem Beispiel ein Schneiderad 16 aus einem Hartmetall. Es versteht sich, dass auch andere Schneidewerkzeuge 18 wie eine Diamantnadel oder ein Laser verwendet werden können. Ebenso versteht es sich, dass das Schneidewerkzeug 18 bei einer Basisscheibe 1' aus Glas, diese nur anschneidet oder anritzt und die erste Scheibe 1 im Anschluss, beispielsweise durch eine geringe mechanische Belastung, aus der Basisscheibe 1' herausbricht.

Des Weiteren umfasst die Vorrichtung 30 ein Entschichtungswerkzeug 17 zum Einbringen eines beschichtungsfreien Bereichs 9.1 in die funktionelle Beschichtung 3. Das Entschichtungswerkzeug 17 ist in diesem Beispiel ein Laserstrahl 15. Der Laserstrahl 15 wird auf die funktionelle Beschichtung 3 auf der Oberfläche III der Basisscheibe 1' geführt. Dort wird die funktionelle Beschichtung 3 unter Einwirkung des Laserstrahls 15 abgetragen, beispielsweise durch Verdampfen.

Es versteht sich, dass das Entschichtungswerkzeug 17 auch ein Schleifrad oder ein anders geeignetes Werkzeug sein kann.

Die Vorrichtung 30 umfasst des Weiteren eine Verfahreinrichung 19 mit der das Schneidewerkzeug 18 und das Entschichtungswerkzeug 17 bewegt werden können. In diesem Beispiel ist die Verfahreinrichtung 19 ein X-Y-Verfahrtisch 20, der die Werkzeuge 18,19 simultan in Ebene der Basisscheibe 1' verschiebt- Als Verfahreinrichtung 19 kann auch jede andere geeignete Einrichtung verwendet werden, beispielsweise ein Mehr-Achsen-Handhabungsgerät oder ein Roboter.

Ebenso, kann das Entschichtungswerkzeug 17 und insbesondere der Laser auf der anderen Seite der Basisscheibe 1' angeordnet sein, so dass der Laserstrahl 15 durch die erste Scheibe 1 hindurch geführt wird und erst dann auf die funktionelle Beschichtung 3 trifft. Diese Anordnung hat den besonderen Vorteil, dass abgedampftes Material der funktionellen Beschichtung 3 nicht in den Weg des Laserstrahls 15 gelangen kann, so dass dieser nicht gestreut und nicht abgeschwächt wird, und eine höhere Strukturierungsgenauigkeit erzielt wird.

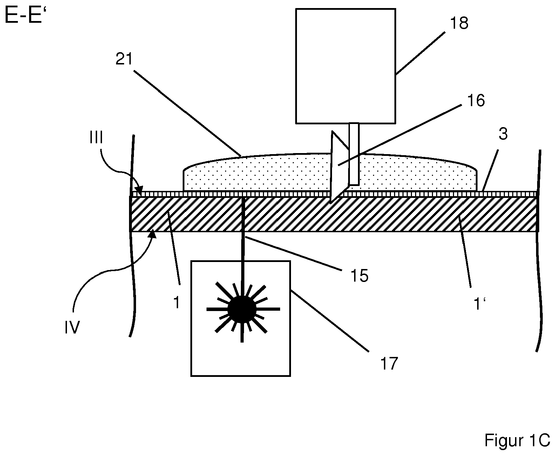

Figur 1C zeigt eine Ausgestaltung einer erfindungsgemäßen Vorrichtung zur Durchführung des erfindungsgemäßen Verfahrens. Dabei ist das Entschichtungswerkzeug 17 ein Laser, der im Vergleich mit Figur 1B auf der dem Schneidewerkzeug 18 gegenüberliegenden Seite der Basisscheibe 1' angeordnet ist, so dass der Laserstrahl 15 durch die erste Scheibe 1 hindurch geführt wird und erst dann auf die funktionelle Beschichtung 3 trifft. Bevorzugt wird das Schneidrad 16 des Schneidewerkzeugs 18 zusammen mit einem Bereich der funktionellen Beschichtung 3 mit einem Kühlfluid 21, beispielsweise einem Schneidöl, gekühlt, das dabei zumindest einen Bereich der funktionellen Beschichtung 3 benetzt. Vorteilhafterweise trifft der Laserstrahl 15 durch die erste Scheibe 1 hindurch auf die funktionelle Beschichtung 3, die auf der der ersten Scheibe 1 abgewandten Seite mit dem Kühlfluid 21 benetzt ist. Dabei kann der Laserstrahl 15 unmittelbar neben der Kontaktstelle zwischen Schneidrad 16 und funktioneller Beschichtung 3 geführt werden, oder einer Spur folgend, die das Kühlfluid auf der funktionellen Beschichtung 3 nach der Bearbeitung mit dem Schneidrad 16 hinterlässt. Diese Anordnung hat den besonderen Vorteil, dass abgedampftes Material der funktionellen Beschichtung 3 von dem Kühlfluid 21 gebunden wird und damit nicht durch die Anordnung diffundieren oder sich auf benachbarten Abschnitten der funktionellen Beschichtung 3 abscheiden kann. Typischerweise wird das auf der Oberfläche der ersten Scheibe 1 verbliebene Kühlfluid 21 in einem weiteren Verfahrensschritt abgewaschen und damit auch das im Kühlfluid 21 gebundene, abgetragene Material der funktionellen Beschichtung 3 entfernt.

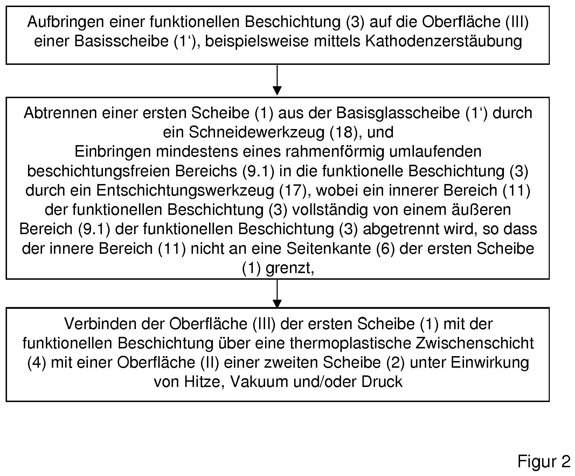

Figur 2 zeigt ein Flussdiagramm eines Ausführungsbeispiels des erfindungsgemäßen Verfahrens zur Herstellung einer Verbundscheibe 100 mit funktioneller Beschichtung 3.

Im Schritt (a) wird eine funktionelle Beschichtung 3 auf die Oberfläche III einer Basisscheibe 1' aufgebracht, beispielsweise mittels Kathodenzerstäubung.

Im Schritt (b) wird eine ersten Scheibe 1 aus der Basisscheibe 1' durch ein Schneidewerkzeug 18 herausgeschnitten oder angeritzt, und mindestens ein rahmenförmig umlaufender beschichtungsfreier Bereich 9.1 durch ein Entschichtungswerkzeug 17 in die funktionelle Beschichtung 3 eingebracht wird, wobei auf der ersten Scheibe 1 ein innerer Bereich 11 der funktionellen Beschichtung 3 vollständig von einem äußeren Bereich 10.1 der funktionellen Beschichtung 3 abgetrennt wird, so dass der innere Bereich 11 nicht an eine Seitenkante 6 der ersten Scheibe 1 grenzt.

Im Schritt (c) wird die Oberfläche III der ersten Scheibe 1 mit der funktionellen Beschichtung 3 über eine thermoplastische Zwischenschicht 4 mit einer Oberfläche II einer zweiten Scheibe 2 verbunden.

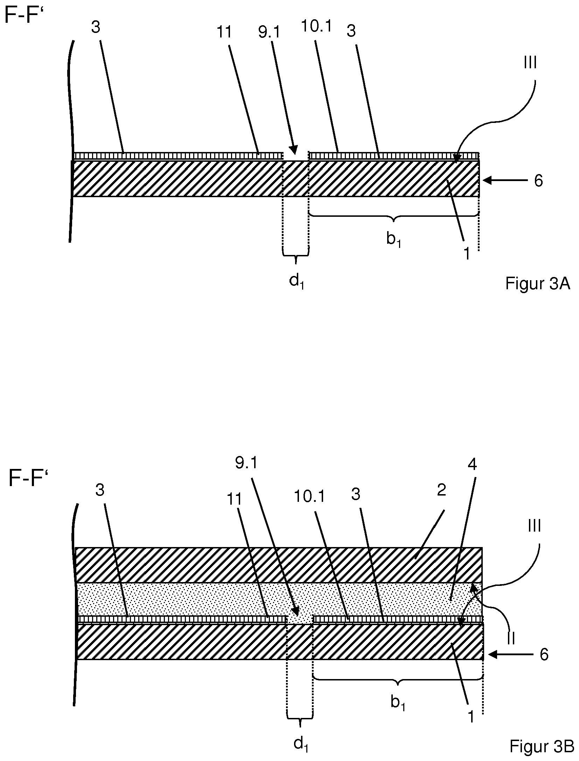

Figur 3A zeigt eine Querschnittsdarstellung entlang der Schnittlinie F-F' der ersten Scheibe 1 nach dem Verfahrensschritt (b). In einem beschichtungsfreien Bereich 9.1 ist die funktionelle Beschichtung 3 vollständig über eine Breite d₁ entfernt. Die funktionelle Beschichtung 3 ist dadurch in einen inneren Bereich 11 und einen äußeren Bereich 10.1 unterteilt. Das bedeutet, dass es keine eine stoffliche Verbindung des Materials der funktionellen Beschichtung 3 des inneren Bereichs 11 mit dem des äußeren Bereich 10.1 mehr gibt.

Anschließend wird im Schritt (c) die erste Scheibe 1 über eine thermoplastischen Zwischenschicht 4 mit einer zweiten Scheibe 2 durch übliche Laminierungsprozesse verbunden, beispielsweise im Autoklaven. Figur 3B zeigt die laminierte Verbundscheibe 100, die nach dem erfindungsgemäßen Verfahren hergestellt wurde.

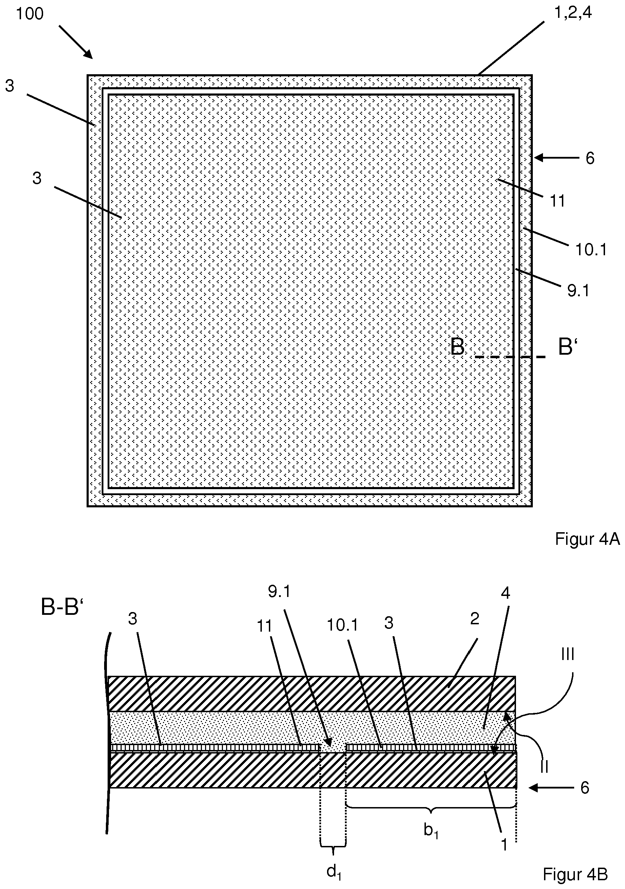

Figur 4A zeigt eine Draufsicht auf eine beispielhafte Ausgestaltung einer erfindungsgemäßen Verbundscheibe 100 mit funktioneller Beschichtung 3. Figur 4B zeigt eine Querschnittsdarstellung entlang der Schnittlinie B-B' der erfindungsgemäßen Verbundscheibe 100 aus Figur 4A. Die Verbundscheibe 100 umfasst eine erste Scheibe 1, eine zweite Scheibe 2 und eine thermoplastische Zwischenschicht 4, die die Oberfläche III der ersten Scheibe 1 mit der Oberfläche II der zweiten Scheibe 2 flächig verbindet. Die erste Scheibe 1 und die zweite Scheibe 2 bestehen beispielsweise aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht beispielsweise aus Polyvinylbutyral (PVB) und weist eine Dicke von 0,76 mm auf. Die Abmessungen der Verbundscheibe 100 betragen beispielsweise 1 m x 1 m.

Auf der Oberfläche III der ersten Scheibe 1 ist eine funktionelle Beschichtung 3 aus einer transparenten elektrisch leitfähigen Beschichtung aufgebracht, die beispielsweise als infrarotreflektierende Schicht oder als elektrische Heizschicht dienen kann. Die funktionelle Beschichtung 3 ist ein Schichtensystem, welches beispielsweise drei elektrisch leitfähige Silberschichten enthält, die durch dielektrische Schichten voneinander getrennt sind.

Die funktionelle Beschichtung 3 erstreckt sich beispielsweise über die gesamte Oberfläche III der ersten Scheibe 1 abzüglich eines rahmenförmig umlaufenden beschichtungsfreien Bereich 9.1, der einen inneren Bereich 11 der funktionellen Beschichtung 3 vollständig von einem äußeren Bereich 10.1 der funktionellen Beschichtung 3 abtrennt. Dies bedeutet, dass der innere Bereich 11 nicht an eine Seitenkante 6 der ersten Scheibe 1 grenzt. Im hier dargestellten Beispiel weißt der rahmenförmig umlaufende beschichtungsfreie Bereich 9.1 die Form einer rechteckigen und hier quadratisch ausgeführten entschichteten Linie mit einer Breite d₁ auf, die über den kompletten Umlauf um eine Abstand b₁ von der Seitenkante 6 der Verbundscheibe 100 ins Scheibeninnere zurück versetzt ist. Der Abstand b₁ ist in diesem Fall die Breite des äußeren Bereichs 10.1 und beträgt beispielsweise 5 mm. Die Breite d₁ des beschichtungsfreien Bereichs 9.1 ist beispielsweise konstant und beträgt beispielsweise 300 µm. Durch diese Anordnung wird vermieden, dass der innere Bereich 11 der funktionellen Beschichtung 3 an die Seitenkante 6 der ersten Scheibe 1 grenzt. In der Verbundscheibe 100 wird dadurch vermieden, dass die funktionelle Beschichtung 3 einen direkten Zugang zur Atmosphäre außerhalb der Verbundscheibe 100 erhält. Durch die Lamination der ersten Scheibe 1 und der zweiten Scheibe 2 mit der Zwischenschicht 4 wird der beschichtungsfreie Bereich 9.1 vollständig mit dem Material der Zwischenschicht 4 gefüllt und der innere Bereich 11 hermetisch abgeschlossen. Die funktionelle Beschichtung 3 im inneren Bereich 11 wird dadurch wirksam vor Feuchtigkeit und damit vor Korrosion geschützt. Wie Untersuchungen der Erfinder überraschenderweise ergaben, genügt eine Breite d₁ von bereits 30 µm um die funktionelle Beschichtung 3 im inneren Bereich 11 vor Korrosion zu schützen. Es versteht sich, dass noch weitere Abschnitte der funktionellen Beschichtung 3 innerhalb des inneren Bereichs 11 oder des äußeren Bereichs 10.1 beschichtungsfrei sein können, ohne dass die oben beschriebene erfindungsgemäße Wirkung des Korrosionsschutzes beeinträchtigt wird. Der schmale beschichtungsfreie Bereich 9.1 kann beispielsweise mittels Laserentschichtung der funktionellen Beschichtung 3 hergestellt werden. Dies hat den besonderen Vorteil, dass die erfindungsgemäße Verbundscheibe 100 schnell und kostengünstig hergestellt werden kann.

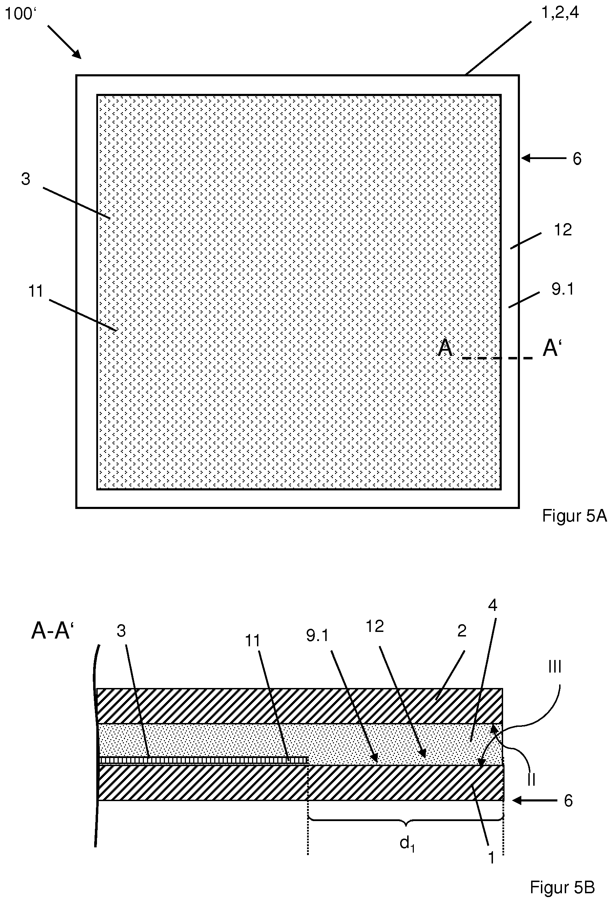

Figur 5A zeigt eine Draufsicht auf eine alternative Ausgestaltung einer erfindungsgemäßen Verbundscheibe 101. Figur 5B zeigt eine Querschnittsdarstellung entlang der Schnittlinie A-A' der Verbundscheibe aus Figur 5A. Der prinzipielle Aufbau der Verbundscheibe 101 entspricht in den Materialien und den Abmessungen der erfindungsgemäßen Verbundscheibe 100 aus Figur 4A und Figur 4B. Die Verbundscheibe 101 weißt ebenfalls eine funktionelle Beschichtung 3 auf, die auf der Oberfläche III der ersten Scheibe 1 angeordnet ist.

Im Unterschied zur erfindungsgemäßen Verbundscheibe 100 aus Figur 4A und Figur 4B, weist die Verbundscheibe 101 im Randbereich 12 der ersten Scheibe 1 einen beschichtungsfreien Bereich 9.1 mit einer Breite d₁ von 15 mm auf, der sich bis hin zur Scheibenkante 6 erstreckt. Das heißt die Verbundscheibe 101 weist keinen äußeren Bereich 9.1 aus einer funktionellen Beschichtung 3 auf.

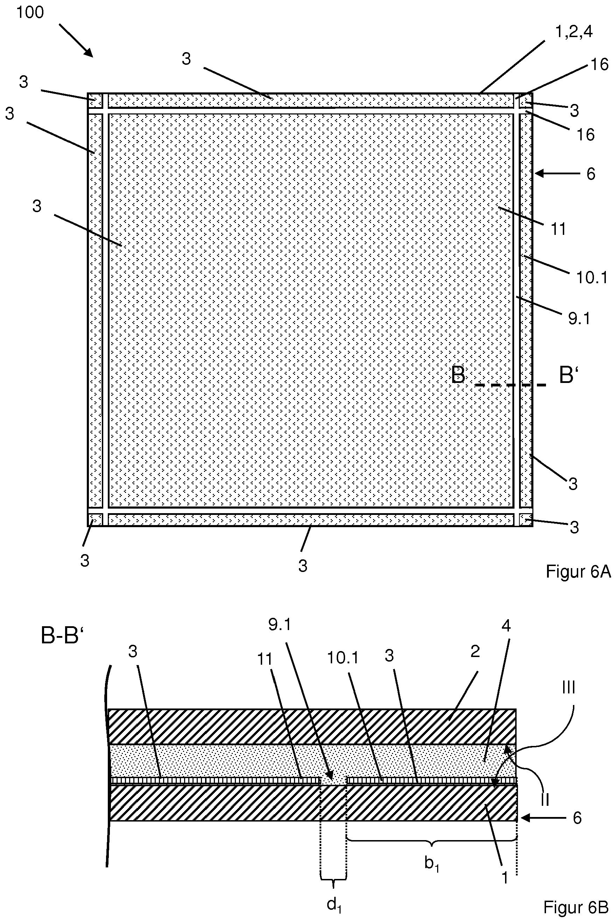

Figur 6A zeigt eine Draufsicht auf eine alternative Ausgestaltung einer erfindungsgemäßen Verbundscheibe 100 mit funktioneller Beschichtung 3. Figur 6B zeigt eine Querschnittsdarstellung entlang der Schnittlinie B-B' der erfindungsgemäßen Verbundscheibe 100 aus Figur 6A. Der Aufbau der Verbundscheibe 100 aus Figur 6A und Figur 6B entspricht im Wesentlichen dem Aufbau der Verbundscheibe 100 aus Figur 4A und 4B, so dass im Folgenden lediglich die Unterschiede zwischen beiden Verbundscheiben 100 beschrieben werden.

Die funktionelle Beschichtung 3 erstreckt sich wie im Beispiels aus Figur 4A ebenfalls über die gesamte Oberfläche III der ersten Scheibe 1 abzüglich eine rahmenförmig umlaufenden beschichtungsfreien Bereich 9.1, der einen inneren Bereich 11 der funktionellen Beschichtung 3 vollständig von einem äußeren Bereich 10.1 der funktionellen Beschichtung 3 abtrennt, so dass der innere Bereich 11 nicht an eine Seitenkante 6 der ersten Scheibe 1 grenzt. Im Unterschied zu Figur 4A ist im Beispiel nach Figur 6A der beschichtungsfreie Bereich 9.1 durch Streifen ausgebildet, die parallel zu den Seitenkanten 6 der ersten Scheibe 1 verlaufen. Diese Streifen überkreuzen sich jeweils in den Eckbereichen der ersten Scheibe 1. Durch die sich überkreuzenden Streifen entsteht ein rahmenförmig umlaufender Bereich der dem beschichtungsfreien Bereich 9.1 entspricht und der die funktionelle Beschichtung 3 vollständig von der Seitenkante 6 der ersten Scheibe 1 abtrennt. Dadurch wird in der fertigen Verbundscheibe 100 die funktionelle Beschichtung 3 im inneren Bereich 11 hermetisch von der Umgebung der Verbundscheibe 100 abgeschlossenen und vor von außen eindringender Feuchtigkeit geschützt. Im Unterschied zum Ausgestaltungsbeispiel nach Figur 4A weist der beschichtungsfreie Bereich 9.1 in Figur 6A Verlängerungselemente 16 auf, die in den Eckbereichen der ersten Scheibe den beschichtungsfreien Bereich 9.1 bis zur Seitenkante 6 verlängern. Da diese ebenfalls nach der Lamination mit der thermoplastischen Zwischenschicht 4 hermetisch versiegelt werden, kann auch hier keine Feuchtigkeit zur funktionellen Beschichtung 3 im inneren Bereich 11 gelangen. Beschichtungsfreie Bereiche 9.1 aus derartigen parallel verlaufende Streifen lassen sich fertigungstechnisch besonders einfach herstellen, beispielsweise durch paralleles Führen eines Entschichtungswerkzeugs für die Entschichtung des beschichtungsfreien Bereichs 9.1, wie einem Laser, zu einem weiteren Werkzeug, dass die erste Scheibe 1 aus einem größeren Basisscheibe herausschneidet oder zum Abtrennen anritzt.

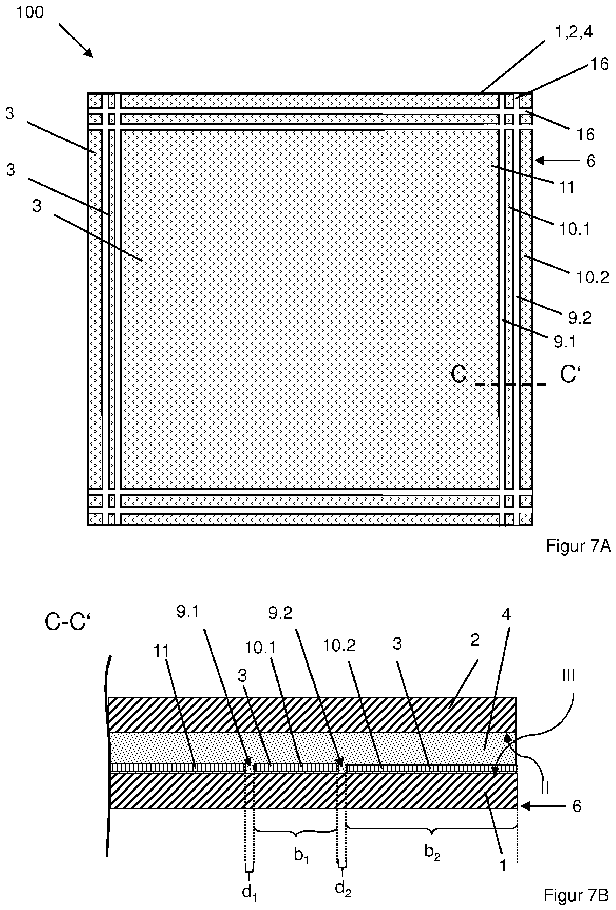

Figur 7A zeigt eine Draufsicht auf eine alternative Ausgestaltung einer erfindungsgemäßen Verbundscheibe 100 mit funktioneller Beschichtung 3. Figur 7B zeigt eine Querschnittsdarstellung entlang der Schnittlinie C-C' der erfindungsgemäßen Verbundscheibe 100 aus Figur 7A. Der Aufbau der Verbundscheibe 100 aus Figur 7A und Figur 7B entspricht im Wesentlichen dem Aufbau der Verbundscheibe 100 aus Figur 6A und 6B, so dass im Folgenden lediglich die Unterschiede zwischen beiden Verbundscheiben 100 beschrieben werden.

Die in diesem Beispiel dargestellte Verbundscheibe 100 weist zusätzlich zum beschichtungsfreien Bereich 9.1 weitere beschichtungsfreie Bereiche 9.2 auf, der von dem beschichtungsfreien Bereich 9.1 rahmenförmig umlaufen wird. Der beschichtungsfreie Bereich 9.2 hat beispielsweise eine Breite d₂ von 100 µm und einen Abstand b₂ vom beschichtungsfreien Bereich 9.1 von 2 mm. Beide beschichtungsfreien Bereiche 9.1,9.2 sind durch parallel zu den Seitenkante 6 der ersten Scheibe 1 verlaufenden Streifen ausgebildet, dich sich in den Ecken der ersten Scheibe 1 jeweils überkreuzen und Verlängerungselemente 12 aufweisen. Dies bedeutet, dass der innere Bereich 11 der funktionellen Beschichtung 3 der ersten Scheibe 1 zumindest durch einen entschichteten Bereich 9.1 der Breite d₁ und einen entschichteten Bereich 9.2 der Breite d₂ von der Seitenkante 6 getrennt sind. Dies führt in der fertigen Verbundscheibe 1 zu einer verbreiterten und damit verbesserten Abtrennung des inneren Bereichs 11 von der die Verbundscheibe 100 umgebenden Atmosphäre und damit zu einem verbesserten Schutz vor Feuchtigkeit und damit vor Korrosion.

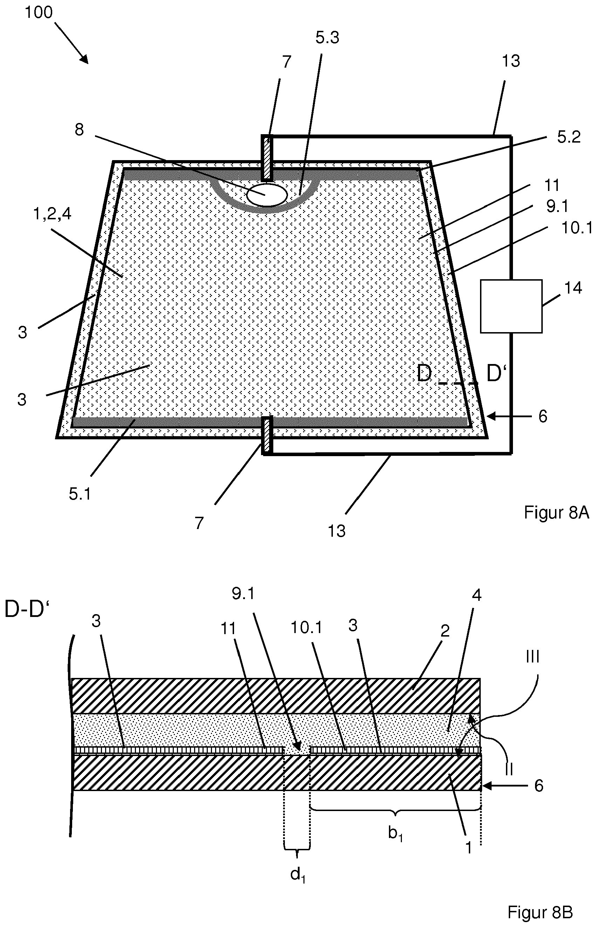

Figur 8A zeigt eine Draufsicht auf eine weitere beispielhafte Ausgestaltung einer erfindungsgemäßen Verbundscheibe 100 mit funktioneller Beschichtung 3 in Form einer elektrischen Heizschicht. Die Verbundscheibe 100 umfasst eine erste Scheibe 1 und eine zweite Scheibe 2, die über eine thermoplastische Zwischenschicht 4 miteinander verbunden sind. Die Verbundscheibe 100 ist beispielsweise eine Fahrzeugscheibe und insbesondere die Windschutzscheibe eines Personenkraftwagens. Die erste Scheibe 1 ist beispielsweise dafür vorgesehen, in Einbaulage dem Innenraum zugewandt zu sein. Die erste Scheibe 1 und die zweite Scheibe 2 bestehen aus Natron-Kalkglas. Die Dicke der ersten Scheibe 1 beträgt beispielsweise 1,6 mm und die Dicke der zweiten Scheibe 2 beträgt 2,1 mm. Die thermoplastische Zwischenschicht 4 besteht aus Polyvinylbutyral (PVB) und weist eine Dicke von 0,76 mm auf. Auf der innenseitigen Oberfläche III der ersten Scheibe 1 ist eine funktionelle Beschichtung 3 aus einer elektrisch leitfähigen Beschichtung aufgebracht, die als elektrische Heizschicht verwendet werden kann. Die funktionelle Beschichtung 3 ist ein Schichtensystem, welches beispielsweise drei elektrisch leitfähige Silberschichten enthält, die durch dielektrische Schichten voneinander getrennt sind. Fließt ein Strom durch diese elektrisch leitfähige funktionelle Beschichtung 3, so wird sie infolge ihres elektrischen Widerstands und joulscher Wärmeentwicklung erwärmt. Die funktionelle Beschichtung 3 kann daher für eine aktive Beheizung der Verbundscheibe 100 verwendet werden.

Die funktionelle Beschichtung 3 erstreckt sich beispielsweise über die gesamte Oberfläche III der ersten Scheibe 1 abzüglich eines umlaufenden rahmenförmigen beschichtungsfreien Bereichs 9.1 mit einer Breite d₁ von 100 µm. Der beschichtungsfreie Bereich 9.1 ist um einen Abstand b₁ von beispielsweise 5 mm von der Scheibenkante 6 ins Scheibeninnere versetzt. Der beschichtungsfreie Bereich 9.1 hat hier zwei technische Aufgaben: er dient der elektrischen Isolierung zwischen der Fahrzeugkarosserie und der spannungsführenden funktionellen Beschichtung 3, wenn diese elektrisch beheizt wird. Des Weiteren wird der beschichtungsfreie Bereich 9.1 durch Verkleben mit der Zwischenschicht 4 hermetisch versiegelt und schützt die funktionelle Beschichtung 3 im inneren Bereich 11 vor Beschädigungen und Feuchtigkeit und damit vor Korrosion.

Zur elektrischen Kontaktierung der als elektrischen Heizschicht dienenden funktionellen Beschichtung 3 ist jeweils ein erster Sammelleiter 5.1 im unteren Randbereich und ein zweiter Sammelleiter 5.2 im oberen Randbereich des inneren Bereichs 11 auf der funktionellen Beschichtung 3 angeordnet. Die Sammelleiter 5.1, 5.2 enthalten beispielsweise Silberpartikel und wurden im Siebdruckverfahren aufgebracht und anschließend eingebrannt. Die Länge der Sammelleiter 5.1, 5.2 entspricht annähernd der Ausdehnung des inneren Bereichs 11 der funktionellen Beschichtung 3.

Wird an die Sammelleiter 5.1 und 5.2 eine elektrische Spannung angelegt, so fließt ein gleichmäßiger Strom durch die elektrisch leitfähige funktionelle Beschichtung 3 zwischen den Sammelleitern 5.1,5.2. Auf jedem Sammelleiter 5.1,5.2 ist ungefähr mittig eine Zuleitung 7 angeordnet. Die Zuleitung 7 ist ein an sich bekannter Folienleiter. Die Zuleitung 7 ist über eine Kontaktfläche mit dem Sammelleiter 5.1,5.2 elektrisch leitend verbunden, beispielsweise mittels einer Lotmasse, eines elektrisch leitfähigen Klebstoffs oder durch einfaches Aufliegen und Andruck innerhalb der Verbundscheibe 100. Der Folienleiter enthält beispielsweise eine verzinnte Kupferfolie mit einer Breite von 10 mm und einer Dicke von 0,3 mm. Über die elektrischen Zuleitungen 7 sind die Sammelleiter 5.1,5.2 über Verbindungskabel 13 mit einer Spannungsquelle 14 verbunden, welche eine für Kraftfahrzeuge übliche Bordspannung, bevorzugt von 12 V bis 15 V und beispielsweise etwa 14 V bereitstellt. Alternativ kann die Spannungsquelle 14 auch höhere Spannungen aufweisen, beispielsweise von 35 V bis 50 V und insbesondere 42 V oder 48 V.

Es versteht sich, dass die funktionelle Beschichtung 3 neben der Heizfunktion noch weitere Funktionen, wie Infrarotreflexion oder Low-E-Eigenschaften, aufweisen kann.

In der Verbundscheibe 100 ist etwa mittig zur Scheibenbreite eine unbeschichtete Zone 8 angeordnet. Die unbeschichtete Zone 8 weist kein elektrisch leitfähiges Material der funktionellen Beschichtung 3 auf. Die unbeschichtete Zone 8 ist hier beispielsweise vollständig von der funktionellen Beschichtung 3 umgeben. Alternativ kann die unbeschichtete Zone 8 am Rand der funktionellen Beschichtung 3 angeordnet sein. Die Fläche der unbeschichteten Zone 8 beträgt beispielsweise 1,5 dm². Die unbeschichtete Zone 8 grenzt an ihrem unteren Ende an einen zusätzlichen Sammelleiter 5.3, der die unbeschichtete Zone 8 auf der Unterseite umrandet. Die unbeschichtete Zone 8 dient beispielsweise als Kommunikations-, Sensor- oder Kamerafenster.

Die Sammelleiter 5.1,5.2,5.3 haben im dargestellten Beispiel eine konstante Dicke von beispielsweise etwa 10 µm und einen konstanten spezifische Widerstand von beispielsweise 2.3 µOhm•cm.

Die nach dem erfindungsgemäßen Verfahren hergestellten Verbundscheiben 100,101 wurden üblichen Korrosionstest unterzogen:
a) einem Feuchtigkeitstest bei einer Temperatur von 70°C und einer relativen Luftfeuchtigkeit von 100 % für eine Dauer von 300 Stunden, sowie
b) einem Klimawechseltest mit 20 Zyklen von jeweils 12 Stunden Dauer bei einer relativen Luftfeuchtigkeit von 85% und einem Temperaturwechsel von 85°C auf -40°C.
c) Salzsprühtest bei einer Temperatur von 35°C über 960 Stunden mit einer wässrigen Natriumchlorid-Lösung

Alle erfindungsgemäß hergestellte Verbundscheiben 100,101 zeigen eine sehr gute Korrosionsbeständigkeit in oben genannten Korrosionstests.

### Bezugszeichenliste:

- 1: erste Scheibe
- 2: zweite Scheibe
- 3: funktionelle Beschichtung
- 4: thermoplastische Zwischenschicht
- 5.1,5.2,5.3: Sammelleiter
- 6: Seitenkante der erste Scheibe 1
- 7: Zuleitung
- 8: unbeschichtete Zone, Kommunikationsfenster
- 9.1,9.2: beschichtungsfreier Bereich
- 10.1,10.2: äußerer Bereich
- 11: innerer Bereich
- 12: Randbereich
- 13: Verbindungskabel
- 14: Spannungsquelle
- 15: Laserstrahl
- 16: Schneidrad
- 17: Entschichtungswerkzeug
- 18: Schneidewerkzeug
- 19: Verfahreinrichtung
- 20: X-Y-Verfahrtisch
- 21: Kühlfluid
- 30: erfindungsgemäße Vorrichtung
- 100,101: erfindungsgemäße Verbundscheibe

- II: Oberfläche der zweiten Scheibe 2
- III: innenliegende Oberfläche der ersten Scheibe 1
- IV: außenliegende Oberfläche der ersten Scheibe 1

- A-A', B-B', C-C', D-D', E-E', F-F': Schnittlinie
- b₁, b₂: Breite des äußeren Bereichs 10.1,10.2
- d₁, d₂: Breite des beschichtungsfreien Bereichs 9.1,9.2
- x,y: Richtung

## Patentansprüche

1. Verfahren zur Herstellung einer Verbundscheibe (100) mit funktioneller Beschichtung (3), wobei mindestens:
(a) eine funktionelle Beschichtung (3) zumindest auf einen Teil einer Ober-fläche (III) einer Basisscheibe (1') aufgebracht wird,
(b) zeitgleich eine erste Scheibe (1) aus der Basisscheibe (1') herausgeschnitten wird, und mindestens ein beschichtungsfreier Bereich (9.1,9.2) in die funktionelle Beschichtung (3) eingebracht wird, der einen inneren Bereich (11) der funktionellen Beschichtung (3) vollständig umgibt und den inneren Bereich (11) von einem äußeren Bereich (10.1,10.2) abtrennt, der den inneren Bereich (11) teilweise oder vollständig umgibt, und
(c) die Oberfläche (III) der ersten Scheibe (1) mit der funktionellen Beschichtung (3) über eine thermoplastische Zwischenschicht (4) mit einer Oberfläche (II) einer zweiten Scheibe (2) verbunden wird,
wobei für das Einbringen des beschichtungsfreien Bereichs (9.1,9.2) ein Entschichtungswerkzeug (17) mit einem Laserstrahl (15) und für das Herausschneiden ein Schneidewerkzeug (18) mit einem Schneidrad (16) und mit einem Kühlfluid (21) verwendet wird,
wobei in Schritt (b) das Schneidrad (16) unmittelbar auf der beschichtete Oberfläche (III) der ersten Scheibe (1) geführt wird und der Laserstrahl (15) durch die der beschichteten Oberfläche (III) der ersten Scheibe (1) abgewandte Oberfläche (IV) in die erste Scheibe (1) eingekoppelt wird und durch die erste Scheibe (1) auf die funktionelle Beschichtung (3) geführt wird,
wobei das Schneidewerkzeug (18) und das Entschichtungswerkzeug (17) simultan verfahren werden und der Laserstrahl (15) in einem von dem Kühlfluid (21) bedeckten Bereich auf die funktionelle Beschichtung (3) geführt wird.

2. Vorrichtung (30) zur Durchführung des Verfahrens nach Anspruch 1, umfassend:
- ein Schneidewerkzeug (18) zum Herausschneiden oder Anritzen einer ersten Scheibe (1) aus einer Basisscheibe (1'),
- ein Entschichtungswerkzeug (17) zum Einbringen eines beschichtungsfreien Bereichs (9.1,9.2) in eine funktionelle Beschichtung (3) auf der Basisscheibe (1') und
- eine Verfahreinrichtung (19) zum Verfahren des Schneidewerkzeugs (18) und des Entschichtungswerkzeugs (17),
wobei das Schneidewerkzeug (18) mit einem Kühlfluid (21) gekühlt ist und ein Schneidrad (16) oder eine Diamantspitze umfasst und das Entschichtungswerkzeug (17) einen Laserstrahl (15) umfasst,
wobei das Entschichtungswerkzeug (17) und das Schneidewerkzeug (18) auf gegenüberliegenden Seiten einer Ebene angeordnet sind, in der die Basisscheibe (1') angeordnet sein kann.

3. Vorrichtung (30) nach Anspruch 2, wobei die Verfahreinrichtung (19) einen Roboter oder ein Mehr-Achsen-Handhabungsgerät oder einen X-Y-Verfahrtisch (20) umfasst.

4. Verbundscheibe (100,101) mit funktioneller Beschichtung (3), hergestellt nach einem Verfahren nach Anspruch 1, mindestens umfassend:
- eine erste Scheibe (1) mit einer Oberfläche (III), eine zweite Scheibe (2) mit einer Oberfläche (II) und eine thermoplastische Zwischenschicht (4), wobei die Oberfläche (III) der ersten Scheibe (1) durch die thermoplastische Zwischen-schicht (4) mit der Oberfläche (II) der zweiten Scheibe (2) flächig verbunden ist.
- mindestens eine funktionelle Beschichtung (3). die zumindest auf einem Teil der innenliegenden Oberfläche (III) der ersten Scheibe (1) aufgebracht ist,
- mindestens einen beschichtungsfreien Bereich (9.1,9.2) der einen inneren Bereich (11) der funktionellen Beschichtung (3) vollständig umgibt.

5. Verbundscheibe (100,101) nach Anspruch 4, wobei der beschichtungsfreie Bereich (9.1,9.2) streifenförmig und im Wesentlichen parallel zu den Seiten-kanten (6) der ersten Scheibe (1) angeordnet ist.

6. Verbundscheibe (100,101) nach Anspruch 4 oder Anspruch 5, wobei die Breite d_{1/2} des beschichtungsfreien Bereichs (9.1,9.2) von 30 µm bis 30 mm, bevorzugt von 100 µm bis 2 mm, besonders bevorzugt von 250 µm bis 1,5 mm und insbesondere von 250 µm bis 500 µm beträgt.

7. Verbundscheibe (100) nach einem der Ansprüche 4 bis 6, wobei der innere Bereich (11) der funktionellen Beschichtung (3) teilweise oder vollständig von mindestens einem äußeren Bereich (10.1,10.2) der funktionellen Beschichtung (3) umgeben ist und bevorzugt die Breite b_{1/2} des äußeren Bereiches (10.1,10.2) von 0,5 mm bis 30 mm und besonders bevorzugt von 3 mm bis 11 mm beträgt.

8. Verbundscheibe (100) nach einem der Ansprüche 4 bis 7, wobei auf der ersten Scheibe (1) ein erster beschichtungsfreier Bereich (9.1) vollständig von einem zweiten beschichtungsfreien Bereich (9.2) und bevorzugt der zweite beschichtungsfreie Bereich (9.2) vollständig von einem dritten beschichtungsfreien Bereich, umrandet ist.

9. Verbundscheibe (100) nach einem der Ansprüche 4 bis 7, wobei die erste Scheibe (1) und/oder die zweite Scheibe (2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält.

10. Verbundscheibe (100) nach einem der Ansprüche 4 bis 7, wobei die funktionelle Beschichtung (3) Silber (Ag), Indium-Zinnoxid (ITO), fluordotiertes Zinnoxid (SnO₂:F) oder aluminiumdotiertes Zinkoxid (ZnO:Al) enthält.

## Claims

1. Method for producing a composite pane (100) with a functional coating (3), wherein at least:
(a) a functional coating (3) is applied at least to part of a surface (III) of a base pane (1'),
(b) at the same time a first pane (1) is cut out of the base pane (1'), and at least one coating-free region (9.1,9.2) is introduced into the functional coating (3), which coating-free region completely surrounds an inner region (11) of the functional coating (3) and separates the inner region (11) from an outer region (10.1,10.2), which partially or completely surrounds the inner region (11), and
(c) the surface (III) of the first pane (1) with the functional coating (3) is bonded via a thermoplastic intermediate layer (4) to a surface (II) of a second pane (2),
wherein a decoating tool (17) with a laser beam (15) is used for introducing the coating-free region (9.1,9.2) and a cutting tool (18) with a cutting wheel (16) and with a cooling fluid (21) is used for the cutting out,
wherein in step (b) the cutting wheel (16) is guided directly on the coated surface (III) of the first pane (1) and the laser beam (15) is launched into the first pane (1) through the surface (IV) facing away from the coated surface (III) of the first pane (1) and is guided through the first pane (1) onto the functional coating (3), wherein the cutting tool (18) and the decoating tool (17) are moved simultaneously and the laser beam (15) is guided onto the functional coating (3) in a region covered by the cooling fluid (21).

2. Device (30) for carrying out the method according to claim 1, at least comprising:
- a cutting tool (18) for cutting or scoring a first pane (1) out of a base pane (1'),
- a decoating tool (17) for introducing a coating-free region (9.1,9.2) into a functional coating (3) on the base pane (1'), and
- a moving device (19) for moving the cutting tool (18) and the decoating tool (17), wherein the cutting tool (18) is cooled with a cooling fluid (21) and comprises a cutting wheel (16) or a diamond tip and the decoating tool (17) comprises a laser beam (15),
wherein the decoating tool (17) and the cutting tool (18) are arranged on opposite sides of a plane in which the base pane (1') can be arranged.

3. Device (30) according to claim 2, wherein the moving device (19) includes a robot or a multi-axis handling device or an X-Y positioning table (20).

4. Composite pane (100,101) with a functional coating (3), produced in accordance with a method according to claim 1, at least comprising:
- a first pane (1) with a surface (III), a second pane (2) with a surface (II), and a thermoplastic intermediate layer (4), wherein the surface (III) of the first pane (1) is laminarily bonded by the thermoplastic intermediate layer (4) to the surface (II) of the second pane (2).
- at least one functional coating (3), which is applied at least on part of the inner surface (III) of the first pane (1),
- at least one coating-free region (9.1,9.2) that completely surrounds an inner region (11) of the functional coating (3).

5. Composite pane (100,101) according to claim 4, wherein the coating-free region (9.1,9.2) is strip-shaped and is arranged substantially parallel to the side edges (6) of the first pane (1).

6. Composite pane (100,101) according to claim 4 or claim 5, wherein the width d_{1/2} of the coating-free region (9.1,9.2) is from 30 µm to 30 mm, preferably from 100 µm to 2 mm, particularly preferably from 250 µm to 1.5 mm, and in particular from 250 µm to 500 µm.

7. Composite pane (100) according to one of claims 4 through 6, wherein the inner region (11) of the functional coating (3) is partially or completely surrounded by at least one outer region (10.1,10.2) of the functional coating (3) and, preferably, the width b_{1/2} of the outer region (10.1,10.2) is from 0.5 mm to 30 mm and particularly preferably from 3 mm to 11 mm.

8. Composite pane (100) according to one of claims 4 through 7, wherein on the first pane (1) a first coating-free region (9.1) is completely bordered by a second coating-free region (9.2) and preferably the second coating-free region (9.2) is completely bordered by a third coating-free region.

9. Composite pane (100) according to one of claims 4 through 7, wherein the first pane (1) and/or the second pane (2) contains glass, preferably flat glass, float glass, quartz glass, borosilicate glass, soda lime glass, or polymers, preferably polyethylene, polypropylene, polycarbonate, polymethylmethacrylate, and/or mixtures thereof.

10. Composite pane (100) according to one of claims 4 through 7, wherein the functional coating (3) contains silver (Ag), indium tin oxide (ITO), fluorine-doped tin oxide (SnO₂:F), or aluminum doped zinc oxide (ZnO:Al).

## Revendications

1. Procédé de fabrication d'un vitrage feuilleté (100) avec revêtement fonctionnel (3), où au moins :
(a) une couche fonctionnelle (3) est appliquée sur au moins une partie d'une surface (III) d'une vitre de base (1'),
(b) simultanément, une première vitre (1) est découpé dans la vitre de base (1') et au moins une zone sans revêtement (91, 92) est introduite dans le revêtement fonctionnel (3), qui entoure complètement un espace intérieur (11) de la couche fonctionnelle (3) et sépare la zone intérieure (11) d'une zone extérieure (10.1, 10.2) qui entoure la zone intérieure partiellement ou complètement (11) et
(c) la surface (III) de la première vitre (1) est connecté à une couche fonctionnelle (3) par une couche intermédiaire thermoplastique (4) avec une surface (II) d'une deuxième vitre (2),
où pour l'introduction de la zone sans revêtement (9.1,9.2) respectivement un outil de décapage (17) avec un faisceau laser (15) et pour la découpe un outil de coupe (18) avec une molette de découpe (16) et avec un liquide de refroidissement (21) est utilisé,
où à l'étape (b) la molette de découpe (16) est guidée directement à la surface avec revêtement (III) de la première vitre (1) et le faisceau laser (15) est couplé dans la première vitre par la surface (IV) détournée de la surface avec revêtement (III) de la première vitre (1) de la surface (1) et est guidé sur le revêtement fonctionnel (3) de la première vitre,
où l'outil de coupe (18) et l'outil de décapage (17) sont déplacés de façon simultanée, et le faisceau laser (15) est guidé dans une zone couverte par le liquide de refroidissement (21) sur le revêtement fonctionnel (3).

2. Dispositif (30) pour exécuter le procédé selon la revendication 1, comprenant:
- un outil de coupe (18) pour découper ou entailler une première vitre (1) dans une vitre de base (1'),
- un outil de décapage (17) pour l'introduction d'une zone libre de revêtement (9.1, 9.2) dans un revêtement fonctionnel (3) sur la vitre de base (1') et
- un équipement de déplacement (19) pour le déplacement de l'outil de coupe (18) et l'outil de décapage (17),
où l'outil de coupe (18) est refroidi par un liquide de refroidissement (21) et comprend une molette de coupe (16) ou une pointe de diamant et de l'outil de décapage (17) comprend un faisceau laser (15),
où l'outil de décapage (17) et l'outil de coupe (18) sont disposés sur des faces opposées d'un plan de la vitre de base, dans laquelle la vitre de base (1') peut être disposée.

3. Dispositif (30) selon la revendication 2, où l'équipement de déplacement (19) comprend un robot ou un appareil de manipulation à plusieurs axes ou une table de déplacement X-Y (20).

4. Vitrage feuilleté (100 101) avec un revêtement fonctionnel (3), fabriqué selon un procédé selon la revendication 1, comprenant au moins:
- une première vitre (1) avec une surface (III), une deuxième vitre (2) avec une surface (II) et une couche thermoplastique Intermédiaire (4), où la surface (III) de la première vitre (1) connectée sur toute sa surface par la couche intermédiaire thermoplastique (4) avec la surface (II) de la deuxième vitre (2).
- au moins une couche fonctionnelle (3), qui est posée au moins sur une partie de la surface intérieure (III) de la première vitre (1),
- au moins une zone libre de revêtement (9.1, 9.2) qui entoure complètement une zone intérieure (11) de la couche fonctionnelle (3).

5. Vitrage feuilleté (100 101) selon la revendication 4, où la zone sans revêtement (9,1, 9,2) est disposé en forme de bandes et essentiellement parallèle aux bords latérales (6) de la première vitre (1).

6. Vitrage feuilleté (100 101) selon la revendication 4 ou 5, où la largeur d_{1/2} de la zone sans revêtement (9.1, 9.2) est de 30 µm à 30 mm, de préférence de 100 µm à 2 mm, de manière particulièrement favorisée de 250 µm à 1,5 mm et en particulier de 250 µm à 500 µm.

7. Vitrage feuilleté (100) selon l'une des revendications 4 et 6, où la zone intérieure (11) du revêtement fonctionnel (3) est entourée partiellement ou complètement par au moins une zone extérieure (10.1, 10.2) du revêtement fonctionnel (3) et de préférence la largeur b_{1/2} de la zone extérieure (10,1, 10,2) est de 0,5 mm à 30 mm et de manière particulièrement préférée par 3 mm à 11 mm.

8. Vitrage feuilleté (100) selon l'une des revendications 4 à 7, où sur la première vitre (1) une première zone sans revêtement (9.1) est bordée complètement par une deuxième zone sans revêtement (9.2) et de préférence la deuxième zone sans revêtement (9.2) est bordée complètement par une troisième zone sans revêtement.

9. Vitrage feuilleté (100) selon l'une des revendications 4 à 7, où la première vitre (1) et/ou la deuxième vitre (2) contient du verre, de préférence du verre plat, du verre flotté, du verre de quartz, du verre borosilicate, du verre à chaux sodée ou des polymères, de préférence du polycarbonate, du polypropylène, du polyéthylène, du polyméthacrylate de méthyle et/ou des mélanges de ceux-ci.

10. Vitrage feuilleté (100) selon l'une des revendications 4 à 7, où le revêtement fonctionnel (3) contient de l'argent (AG), de l'oxyde d'indium-étain (ITO), de l'oxyde d'étain dopé au fluor (SnO₂:F) ou de l'oxyde de zinc dopé à l'aluminium (ZnO:Al).
